# EUROPEAN PATENT SPECIFICATION

(11) **EP 3 271 667 B1**
(45) Date of publication and mention of the grant of the patent: **15.05.2019**
(21) Application number: 15808377.4
(22) Date of filing: 09.12.2015
(51) Int. Cl.: F24S 30/20, F24S 25/00, F24S 20/50

(54) **APPARATUS AND METHOD FOR SETTING UP FOLDABLE COLLECTOR MODULE ARRANGEMENTS**
VORRICHTUNG UND VERFAHREN ZUM AUFBAU VON FALTBAREN KOLLEKTORMODULANORDNUNGEN
APPAREIL ET PROCÉDÉ D'ÉTABLISSEMENT D'AGENCEMENTS DE MODULES COLLECTEURS PLIABLES

(30) Priority: 20.03.2015 CH 4162015
(43) Date of publication of application: 24.01.2018
(73) Proprietor: Smartvolt AG, 3360 Herzogenbuchsee (CH)
(72) Inventor: WEHRLI, Kilian, 2563 Ipsach (CH)
(74) Representative: BOVARD AG
(86) International application number: PCT/EP2015/079131
(87) International publication number: WO 2016/150530

(56) References cited:
- EP-A1- 2 378 565
- WO-A1-2010/118236
- US-A1- 2010 269 446
- US-A1- 2011 240 093
- US-A1- 2013 186 450
- US-A1- 2013 340 807

## Description

The present invention relates to an apparatus and a method for setting up a foldable collector module arrangement, in particular for setting up collector module arrangements which comprise four collector modules coupled in a row by hinged parts between adjacent modules such that in a folded state the modules are arranged essentially parallel to each other and in an unfolded state the modules are arranged in a zig-zag or flat form.

For an easy and fast coverage of large areas by collector modules, e. g. solar collectors for the generation of electricity or heat, collector module arrangements have been developed which include several plane modules coupled by hinges in a row. The collector module arrangements can be folded for providing a compact and space-saving arrangement. In operation the collector module arrangements are unfolded to an extended state of the collector modules, wherein the modules are arranged as a flat plane or in a zig-zag form. Such collector module arrangement are disclosed for example in WO 2015/028572 or US 2009/0178703.

For setting up a field of collector modules, for example for covering the area of a roof, a plurality of such collector module arrangements need to be arranged next to each other and connected with each other. In general the collector modules are transported in a folded state. At a construction site the modules are manually unfolded and transferred to the area to be covered e. g. by a crane. Alternatively the folded modules are transported to the area to be covered, where they are manually unfolded on the spot. This procedure is very protracted, needs a lot of man-power and is error-prone.

To facilitate the set up and demounting of a larger area of collector modules a transportable system according to DE 102004023043 is known, which comprises solar modules interconnected by articulations, which are placed in a cradle. The solar modules are connected to and held by a support that is mounted on the cradle, in such a way the modules can be deployed and folded away while being connected to the cradle. The modules lie on the support in the deployed state and are additionally supported by telescopic legs that can be extended outside the cradle. The system is set up by manually deploying the frames containing the solar modules and can be stored away by manually collapsing the frames. Although this system may cover a larger area with solar modules the handling of the set-up is still very cumbersome and requires a lot of man-power.

According to US 2013/0186450 a solar power system includes a solar power arm configurable between a transport and a deployed configuration. The solar power arm, i.e. via wheels is movable along tracks assisted by mechanical aides for deployment wherein an outermost frame of the solar power arm is pulled along the track.

US 2011/0240093 describes a solar photovoltaic structure employing a hinged photovoltaic roof deck that is folded for transportation. The solar photovoltaic roof deck is lifted by a crane or hoist in a folded position and is unfolded in place by opening upper hinges.

It is an object of the present invention to provide an apparatus and a method for setting up a foldable collector module arrangement in a quick and easy way, which reduces costs for set-up and demounting, saves labour, and unfolds and collapses the module arrangements in a reliable and precise operation, which is suitable for covering horizontal and inclined plains by collector modules.

These and other objects are fulfilled by an apparatus according to claim 1 and a method according to claims 13, 16 or 18. Advantageous features and preferred embodiments of the apparatus and the method according to the invention are disclosed in dependent claims. In particular a version of the apparatus according to claims 10 - 12 and a method according to claims 16 to 18 can be utilized advantageously in a variety of different applications for foldable collector module arrangements.

The basic idea of the present invention is to provide a folding apparatus for unfolding and folding a foldable collector module arrangement, wherein the module arrangement is suspended from a carrier, particularly a bar system, of the apparatus and can be extended along the carrier by moving the collector modules of the module arrangement in opposite direction such that hinges connecting the collector modules are opened.

The invention is particularly suitable for handling a foldable collector module arrangement which comprises four collector modules coupled in a row, i. e. two inner modules and two end modules aligned along a common axis. The collector modules are coupled by two side hinged parts between an end module and an inner module and a middle hinged part between the two inner modules. In a folded state of the hinged parts the module planes are arranged essentially parallel to each other. When the folded collector module arrangement is put upright ready for being unfolded, the two side hinged parts are located at an upper end of the module arrangement and the middle hinged part is located at a lower end of the module arrangement. In an unfolded state the modules are arranged in a zig-zag or flat form. In general the idea of the invention is also suitable for collector module arrangements comprising more than four modules hinged together in a row or sideways. However for an easy understanding, the invention will be described for a module arrangement of four collector modules.

To unfold the module arrangement it is attached by several attachment points on a bottom side of the carrier or the bar system, respectively, in a hanging position, e. g. on elements that can slide along the carrier or bars and/or that can pull up or lower down sections of the module arrangement for opening the hinged parts of the collector module arrangement. Advantageously the bar system may be designed as a telescopic system, such that the length of the bar system can be elongated and retracted. For example some of the bars can be arranged slideably at each other, so that they can move relative to each other and extend beyond each other. Thus the carrier can be provided in differing lengths and can be adapted to the different sizes of the collector module arrangement in folded or unfolded state.

Advantageously before unfolding the module arrangement the folding apparatus with the suspended module arrangement can be lifted to a predetermined area on which the collector module arrangement shall be installed, for example by a crane or the like. At the predetermined area the bar system is positioned in place and the telescopic bars are extended to establish an elongated state of the bar system. The module arrangement is unfolded along the length of the bar system by pulling or pushing apart the collector modules and/or lifting their end sections. After opening, the module arrangement can be detached from the bar system in the unfolded state.

In reverse an unfolded module arrangement can be attached to an elongated bar system of the apparatus and can be folded up along the bar system by sliding backwards along the bars and/or by lowering or lifting sections of the module arrangement. Again the folded collector module arrangement can be removed by a crane or the like.

Alternatively the lifting movement of a crane or the like may be exploited as drive mechanism to unfold a folded collector module arrangement as will be explained in more detail below.

According to the invention an apparatus for unfolding a foldable collector module arrangement which comprises four collector modules coupled in a row by two side hinged parts and a middle hinged part between adjacent modules such that in a folded state the modules are arranged essentially parallel to each other and in an unfolded state the modules are arranged in a zig-zag or flat form from a folded state to an unfolded state comprises a horizontal longitudinal carrier to which the collector
module arrangement is attached in a hanging position. The carrier may be an elongated strut strong enough to carry the collector module arrangement. Also the carrier may be slightly arched or buckled as long as it is arranged horizontally in general.

Advantageously the carrier comprises a main bar and two sliding bars slideably supported on the main bar such, that the sliding bars slide in opposite direction along the main bar from a retracted position to an extended position protruding over the main bar. For example the sliding bars are arranged on a bottom side of the main bar or the bars can be slideably arranged within each other. In the retracted position preferably inner ends of the two sliding bars are facing each other in a middle area of the main bar. In the extended position outer ends of the sliding bars protrude over opposing ends of the main bar. Thus the overall length of the bar system is larger in the extended position than in the retracted position. Preferably the two sliding bars are moving in a symmetrical way along the main bar.

Further the apparatus comprises attachment means for releasably attaching hinged parts of the module arrangement to the apparatus. At the start of an unfolding procedure the attachment means are advantageously located at a centre region of the carrier or the main bar. Alternatively they are located at an inner end of each sliding bar. Further the apparatus comprises coupling means for releasably coupling collector modules of the collector module arrangement to the carrier or to each sliding bar, respectively. In particular the coupling means are arranged for releasably coupling the end modules of the arrangement to the carrier or to each sliding bar.

Furthermore the apparatus comprises a pulling arrangement for opening the hinged parts of the collector module arrangement. Further the pulling arrangement may be designed for lifting an outer edge of the end modules in direction of the sliding bar by pulling the pulling arrangement. Thus all hinged parts of the module arrangement can be opened to unfold the module arrangement. The pulling arrangement is attached to the attachment means and/or the coupling means for moving the attachment means and/or the coupling means relative to the carrier.

The pulling arrangement may be activated manually, may be powered for example by an electric motor or may be activated by a lifting movement of a crane or the like. When using sliding bars, the bars are in their extended position or are moved to their extended position in course of the unfolding movement. The pulling arrangement is activated for opening the hinged parts of the collector module arrangement and in case necessary for lifting the outer edge of the end module by movement of the attachment means and/or the coupling means. Advantageously the pulling arrangement also is designed to slide the sliding bar in the extended position. Preferably the pulling arrangement, the attachment means and the coupling means can be activated remotely. Advantageously they are provided with a remote control system that electrically actuates the functions of pulling, attaching and detaching the module arrangement.

In a first version of the apparatus of the present invention it further comprises two carriages, each of which is slideably supported on one of the sliding bars such, that the carriages may slide in opposite direction along their sliding bar from the inner end to the outer end of the sliding bar. The carriages are arranged on a bottom side of the sliding bars, preferably. In the first version of the apparatus the attachment means is provided at an inner end of each sliding bar for releasably attaching the collector module arrangement to the inner end of the sliding bar with a side hinged part of the module arrangement. For example the attachment means are realized as spring-loaded snap locks that engage into snap-in grooves on the side hinged parts as for example on the end of a hinge axis. By releasing the snap lock the hinged parts are detached from the apparatus. In the attached state the side hinged parts of the module arrangement are fixed relative to the sliding bars but may move along the main bar together with the sliding bars. By doing so the middle hinged part of the module arrangement is opened. In another embodiment of the apparatus instead of arranging the attachment means on sliding bars they could be arranged on a simple one piece carrier in a centre area of the carrier.

Furthermore in the first version of the apparatus the pulling arrangement comprises a first pulling means for pulling the sliding bars along the main bar, and a second pulling means for pulling the carriages along their respective sliding bar such, that an outer edge of the end module is lifted in direction of the sliding bar. This is because the coupling means on each sliding bar, that couples the end module of the collector module arrangement to the sliding bar, is arranged on the carriage of the respective sliding bar and therefore moves along the sliding bar. By pulling the first pulling means and the second pulling means, the sliding bars slide away from each other. And also the carriages slide away from each other and relative to the sliding bar. Thereby the foldable collector module is unfolded by opening the hinged parts of the collector module as mentioned above and by lifting the outer edges of the end modules by their coupling to the carriages.

The method for setting up a foldable collector module arrangement according to the invention includes unfolding the foldable collector module arrangement from a folded state to an unfolded state using an apparatus according to the first version of the apparatus as described above and in summary uses the following steps.

First the collector module arrangement is connected with the apparatus by releasably attaching in a hanging position a first side hinged part of the module arrangement at a first attachment means and a second side hinged part of the module arrangement at a second attachment means and by releasably coupling a first end module next to the first side hinged part to a first coupling means and coupling a second end module next to the second side hinged part to a second coupling means.

In case of a carrier comprising a main bar and sliding bars the collector module arrangement is connected with the apparatus by releasably attaching a first side hinged part of the module arrangement at an inner end of a first sliding bar and a second side hinged part of the module arrangement at an inner end of a second sliding bar and by releasably coupling a first end module next to the first side hinged part to a first carriage of the first sliding bar and coupling a second end module next to the second side hinged part to a second carriage of the second sliding bar by the coupling means.

Next for unfolding the collector module arrangement the pulling arrangement is activated for pulling the attachment means and the coupling means along the carrier for opening the hinge parts of the collector module arrangement. In case of a carrier comprising a main bar and sliding bars the first pulling means pulls the sliding bars along the main bar for opening the hinge parts of the module arrangement, and the second pulling means pulls the carriages along the sliding bars for lifting the end modules. Now the collector module arrangement is in an unfolded state and may be lowered by lowering the apparatus until the unfolded module arrangement touches ground at a predetermined position.

At last the attachment means for attaching the first and the second side hinged parts and the coupling means for coupling the first and the second end modules to the carriages are released. Now the collector module arrangement is placed at the predetermined position on the area that is to be covered with collector modules and can simply be connected to a collector system.

A plurality of collector module arrangements can be unfolded and placed on their respective predetermined position in the same fashion so that all the module arrangements together build a collector field. Preferably they can be connected by simple plug-in connections.

The apparatus and the method according to the invention requires only little man power to set up a field of collector modules in very short time. Furthermore it reduces the risk of injuries while handling the collector module arrangements and increases the accuracy of the positioning of the module arrangements. Also the de-installation of a collector field can be accomplished in short time, for example if the area below the collector module arrangements needs maintenance, like for example a roof area.

In an embodiment of the first version of the apparatus according to the invention the first pulling means may comprise at least one closed loop circulating around two pulleys on opposing ends of the main bar. The closed loop may be provided by a chain or a belt, that e. g. can be driven by an electric motor. Thus, the closed loop comprises two loop sections that are arranged parallel to each other between the two pulleys. The two loop sections run contrary towards each other in opposite directions. Each of the sliding bars can be coupled to one of the two loop sections of the first pulling means and therefore they are running in contrary direction relative to each other.

In this embodiment the second pulling means also comprises a closed loop, which is circulating around two pulleys on opposing ends of the sliding bar. The carriages can be connected to the section of this closed loop that runs from the inner end of the sliding bar to the outer end of the sliding bar. The second closed loop can be driven by an electric motor, for example as provided for the first closed loop of the main bar. Preferably the second closed loop does not require an individual power unit but is driven by the movement of the first closed loop. Preferably the closed loop of the second pulling means is at one point fixed relative to the main bar. The fixed point is advantageously arranged at an outer end of the main bar. For example the second closed loop is fixed to a housing part of the main bar. That means the second pulling means arranged at the sliding bars is advantageously driven by the movement of its sliding bar, wherein the sliding bar moves relative to the fixed point of the closed loop. That means it is indirectly driven by the first pulling means.

With such a pulling arrangement it can be ensured that the bar system symmetrically extends to both sides and the collector module arrangement is symmetrically unfolded in the two opposing directions although only one pulling means is provided that is directly driven by a drive unit like an electric motor. This is because the two sliding bars are necessarily driven with the same speed into opposing direction along the main bar by the first closed loop and therefore enlarge the distance between the side hinged parts of the module arrangement symmetrically along the main bar. Furthermore by moving the sliding bars relative to the main bar, the second closed loops rotate within the sliding bars, because they are fixed at one point to the end of the main bar. Consequently the carriages supported on the second closed loops slide along the sliding bars, wherein the carriage are coupled to the section of the second closed loop that runs from the inner ends of the sliding bars towards the outer ends of the sliding bars. Again the two second closed loops run with the same speed and therefore the carriages on the sliding bars slide with the same speed outwards of the bar system. In fact, the carriages slide relative to the main bar along the sliding bar with twice the speed as do the sliding bars run along the main bar. The coupling means arranged on the carriages sliding along the sliding bars relative to the attachment of the side hinged parts at the sliding bar. Thus the outer edges of the end modules are lifted symmetrically in direction of the bar system by the coupling means.

A symmetric unfolding of the collector module arrangement facilitates the positioning on a predetermined area and guarantees accurate opening of the hinged parts of the module arrangement. In the above described embodiment such a symmetric unfolding of the module arrangement is advantageously enabled by a mechanical interaction and mechanical control of the moving parts of the apparatus. Of course the individual moving parts could also be driven individually and controlled individually e. g. by an electronic control unit.

In an embodiment of the first version of the apparatus according to the invention the coupling means comprises at least one strut, one end of which extends from the carriage towards the module arrangement. Said strut end carries a roller which engages with the end module of the module arrangement on a back side of the end module. Thus when the carriage slides along the sliding bar away from the attachment means for attaching the side hinged parts at the inner end of the sliding bar and therefore slide relative to the end module, the roller rolls along the back side of the end module and thereby lifts the edge part of the end module. The length of the strut can be adapted to the required lifting height of the edge of the end module.

Such a coupling means contributes to a save and precise unfolding of the collector module arrangement by the apparatus of the present invention. The length of the movement of the coupling means rollers is automatically limited by the length of the sliding of the carriages along the sliding bars which in turn is limited by the length of the traveling distance of the sliding bars along the main bar. Therefore it can be ensured that the rollers do not slip over the edge of the end modules and loose contact to the modules.

In a second version of the apparatus according to the present invention the main bar comprises two pulleys on opposing ends and the first pulling means comprises two main ropes, each of the main ropes is attached to one of the sliding bars, preferably to an inner end of the sliding bars. Further the main ropes are deflected by a pulley to the upper side of the main bar. Thus each of the main ropes is able to pull the respective sliding bar to the outer end of the main bar and beyond the outer end. The ends of the main ropes extending to the upper side of the main bar can be hooded to a crane or the like and lifted up by the crane. Thus the crane activates the pulling means, the sliding bar slide away from each other and the hinged parts of the collector module arrangement open up. The second pulling means can be identical to the closed loop system as explained before. Therefore the second pulling means is activated by the movement of the sliding bar and can lift up the edges of the end modules.

In a third version of the apparatus according to the present invention the collector module arrangement is attached to skids or attachment means as mentioned before to the carrier or main bar with its side hinged parts. Rollers are arranged on each outer end of the carrier or the outer ends of the sliding bars. The pulling arrangement comprises two pulling ropes, each of which is attached with a first end to an edge part of an end module of the module arrangement and is deflected by the rollers on the outer edges. A second end of the second pulling rope can be pulled to lift the edge part of the end module of the module arrangement and by further pulling the modules are stretched such that the hinged parts are opened.

Additionally the pulling arrangement may comprise a further pulling rope attached with a first end to a middle hinged part of the module arrangement. The further pulling rope is deflected by a first roller arranged on a centre section of the main bar and a second roller arranged at an outer end of one of the sliding bars. A second end of the pulling rope can be pulled to lift the middle hinged part of the module arrangement. The side hinged parts of the module arrangement are releasably attached to skids that are slideably coupled to the carrier or the main bar. Thus, when pulling the second end of the pulling rope the middle hinged part is lifted and the side hinged parts slide along the main bar towards the opposing ends of the main bar, while the hinged parts are opened.

In the third version the hinged parts of the module arrangement and the edges of the end parts are actuated individually be the independent pulling ropes. The ropes may be activated manually or they can be actuated automatically for example by a rope winch that is run by a motor.

The method for setting up a foldable collector module arrangement using the third version of the apparatus includes the following steps. The collector module arrangement is attached to the apparatus by releasably attaching side hinged parts to skids running along the carrier or the main bar and by releasably coupling the edge parts of the end modules of the module arrangement to the first end of a first and a second pulling rope respectively. For unfolding the module arrangement the first and the second pulling ropes are pulled for sliding the skids to outer ends of the carrier or the main bar. Thus the pulling ropes are lifting the edge part of the end modules of the module arrangement and further pull the skids or the sliding bars along the carrier or the main bar. The further pulling rope can be pulled simultaneously to assist the lifting of the middle hinged part. When the module arrangement is in the desired unfolded state, which can be adapted by adjusting the pulling distances of first and second pulling rope, the attachment means for attaching the middle hinged part and the side hinged parts, and the coupling means for coupling the edge part of the end modules are released and the module arrangement is readily set up.

This version of the apparatus according to the invention allows for more individual opening of the angles of the side hinged parts and the collector module arrangement can be adapted to specific surface conditions by individually pulling the second pulling means on the opposing ends of the bar system.

In a fourth version of the apparatus according to the present invention the collector module arrangement is lifted up to the carrier or bar system by attaching an upper end of the folded arrangement to the pulling arrangement. A bottom end of the arrangement is coupled to the carrier or bar system at a fixed level or distance from the carrier or bar system while the collector modules remain free for a side movement relative to the carrier or bar system. Next the upper end is lowered down by the pulling arrangement and as a result of the own weight of the collector modules the hinged parts open up while the bottom end of the collector module arrangement stays on the said fixed level and the collector module arrangement stretches sideways.

In the fourth version of the folding apparatus the attachment means are vertically moveable relative to the carrier or bar system and designed for being releasably attached to side hinged parts located at an upper end of the folded collector module arrangement. The coupling means are vertically fixed relative to the carrier and are designed for being releasably attached to a lower end of the end modules and to a middle hinged part located at a lower end of the folded collector module arrangement. The pulling arrangement is attached to the attachment means for vertical movement of the attachment means relative to the carrier and relative to the coupling means for opening the hinged parts of the collector module arrangement by lowering the attachment means relative to the coupling means while the attachment means are connected to the side hinged parts.

For coupling the bottom end of the collector module arrangement to the carrier or bar system at a fixed level or distance as mentioned above the carrier or bar system comprises extensions extending downwards towards the collector module arrangement. The coupling means are arranged on end regions of these extensions. In one embodiment of the apparatus first extensions extend downwards from an outer end of two sliding bars of a bar system as described above and a second extension extends downwards from a main bar of the bar system. Preferably the second extension is located at a centre region of the main bar. Thus, the first and second extensions carrying the coupling means are slideably arranged relative to each other while the coupling means remain on the fixed level relative to the bar system. The coupling means of the first extensions are attached to the lower end of the end modules and the coupling means of the second extension is attached to the middle hinged part located at a lower end of the folded collector module arrangement. When the attachment means are lowered by the pulling arrangement and the hinged parts open up, the first extensions are slid to opposite ends of the main bar system while the end modules remain in the coupling means. Therefore the collector module arrangement stays on the same level while being unfolded.

In the fourth version of the apparatus the pulling arrangement may comprise a first pulling means in form of flexible elongated means, like a line, a cable, a wire or a chain, which is guided by two guiding blocks arranged on the carrier and driven by a motor. Preferably but not necessarily the guiding blocks are slideable along the carrier or bar system to adapt their position relative to the side hinged parts of the collector module arrangement during an unfolding procedure. The two ends of the first pulling means extend from the bottom side of the carrier or bar system and are coupled to the attachment means. Thus the attachment means can be lifted up and lowered down in vertical direction relative to the carrier. Additionally the pulling arrangement may comprise a second pulling means for pulling the guiding blocks to opposite ends along the carrier. For example the second pulling means may be designed as a closed loop circulating around two pulleys on opposing ends of the main bar of a bar system, similar to the closed loop of the previous version of the apparatus.

The method for setting up a foldable collector module arrangement by using an apparatus according to the fourth version comprises the following steps. First the folded collector module arrangement in an upright position is lifted up from the ground or from a transportation box by vertically lifting the first and the second side hinged parts by the pulling arrangement until the collector module arrangement is positioned for coupling with the coupling means of the apparatus. This is for example the position, when the collector modules are lifted up in between the extensions such that the end regions carrying the coupling means extend to the region of the bottom end of the collector module arrangement of beyond. Then the coupling means are releasably coupled to the lower end of the end modules and to the middle hinged part located at a lower end of the folded collector module arrangement. Preferably the coupling means couple automatically to the collector module arrangement. For example the coupling means comprise a snap fit at the end regions of extensions of the carrier, which automatically snap into the lower end of the end modules and into the middle hinged part located at the lower end of the folded collector module arrangement, when they pass the snap fits. Of course other coupling means may be used as well. Now the collector module arrangement is carried by the attachment means at the upper end and also by the coupling means at the lower end of the collector module arrangement.

Next the first and the second side hinged parts are lowered down by the pulling arrangement, wherein the coupling means remain vertically fixed. Thus, the coupling means slide outwards along the carrier to opposite ends of the carrier and the collector module arrangement unfolds due to the own weight of the collector module arrangement. Advantageously the fourth version of the apparatus allows to specify accurately the level of the bottom side of the collector module arrangement which facilitates the positioning on a predetermined area that shall be covered by collector modules.

Finally the attachment means for attaching the first and the second side hinged parts and the coupling means for coupling the collector module arrangement are released from the collector module arrangement. The apparatus is free for setting up a next folded collector module arrangement.

In one embodiment of the apparatus the guiding blocks are designed to be moved to opposite ends of the main bar by the second pulling means such that their position remains vertical above the position of the first and the second side hinged part while unfolding the collector module arrangement. As a result the two ends of the first elongated pulling means run vertically in respect of the collector module arrangement at all times during the unfolding procedure. The vertical alignment of the first pulling means at the upper side hinged parts assists the gravitational force of the own weight of the collector module arrangement to unfold the hinges.

In a further variant of the method the sliding bars are moved outwards relative to the main bar by lowering the first and the second side hinged parts by the pulling arrangement. The end modules push their respective coupling means on the sliding bars outwards in opposite direction. Thus the collector module arrangement can fully stretch to both sides without being restricted by the coupling means. Alternatively the sliding bars are coupled to the closed loop of the pulling arrangement and moved to opposite ends of the main bar by activating the closed loop. The active movement of the coupling means driven by the closed loop may further assist the unfolding procedure.

With the apparatus according to the fourth version of the invention a large surface area can be covered with collector modules in a short period of time and with only little required man power. The folded collector module arrangements can be held on stock or transported safely in protecting boxes. On the spot the apparatus can easily pick up the collector module arrangements form the boxes and place them fully unfolded at a predetermined spot.

Although four versions of the apparatus according to the invention have been discussed in detail, the features of each version may be combined. For example an additional version may comprise a first closed loop running in the main bar and also the further pulling rope as described above. In this case the pulling rope could also drive the first closed loop when the second end of the first pulling rope is pulled. Also the first closed loop could be combined with a second pulling rope for individually lifting the edges of the end modules. Or the further pulling rope is used to activate the second closed loop in the sliding bars comparable to the version including the two main ropes hooked to the crane.

Four exemplary embodiments of the invention will be illustrated in the following drawings, which merely serve for explanation and should not be construed as being restrictive. The features of the invention becoming obvious from the drawings should be considered to be part of the disclosure of the invention both on their own and in any combination. The drawings show:
Fig. 1: a schematic view of a first version of the apparatus according to the invention in an intermediate position,
Fig. 2: a schematic view of the first version of the apparatus according to figure 1 in a retracted position,
Fig. 3: a schematic view of the first version of the apparatus according to figure 1 in an extended position,
Fig. 4: a schematic view of a second version of the apparatus according to the invention in a retracted position,
Fig. 5: a schematic view of the second version of the apparatus according to figure 4 in an extended position,
Fig. 6: a schematic view of a third version of the apparatus according to the invention in a retracted position,
Fig. 7: a schematic view of the third version of the apparatus according to figure 6 in an extended position,
Fig. 8: a schematic view of a fourth version of the apparatus according to the invention in a nearly extended position,
Fig. 9a: a side view of the fourth version of the apparatus according to figure 8 in a retracted position,
Fig. 9b: a side view of the fourth version of the apparatus according to figure 8 in a fully extended position,
Fig. 10a: a three-dimensional view of the fourth version of the apparatus according to figure 8 in a retracted position, and
Fig. 10b: a three-dimensional cutout of a bottom part of the apparatus according to figure 10a.

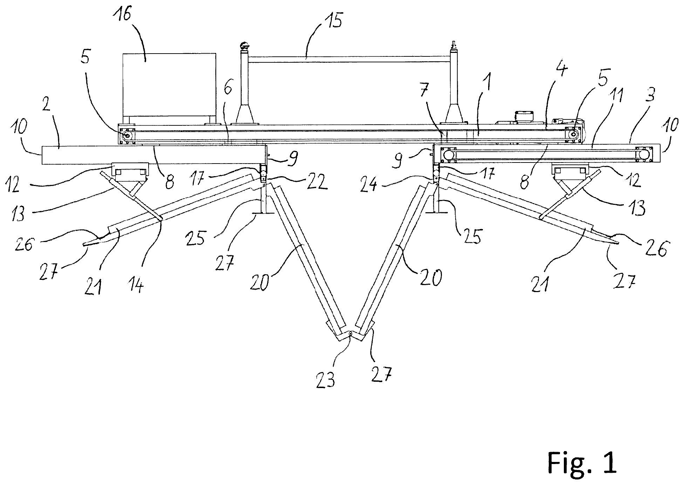

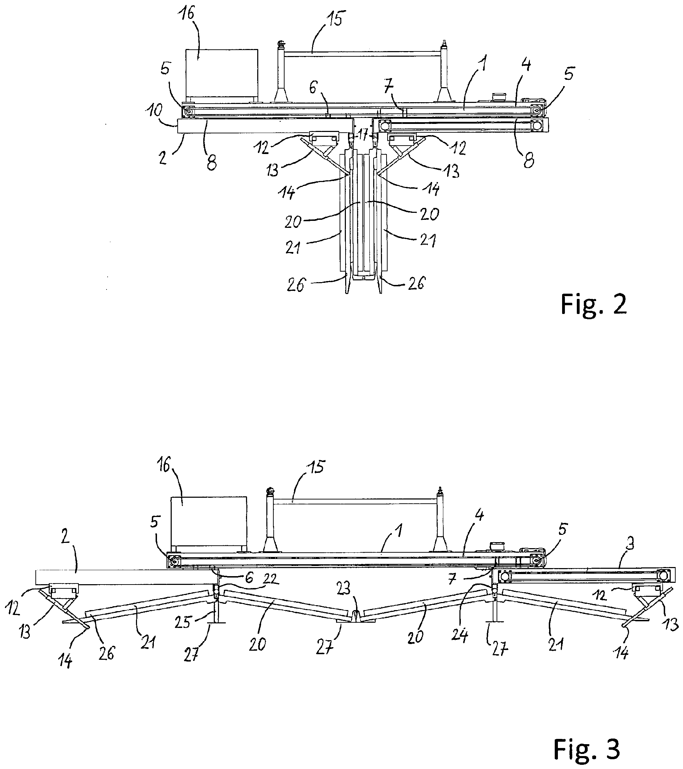

Figures 1 to 3 show a first version of the apparatus according to the invention in an intermediate position (figure 1) with a collector module arrangement half way folded, a retracted position (figure 2) with the module arrangement in a folded state, and an extended position (figure 3) with the module arrangement in an unfolded state.

The apparatus comprises a main bar 1, a first sliding bar 2 and a second sliding bar 3, which together form a bar system of the apparatus. Further the apparatus comprises a first pulling means in form of a first closed loop 4. The closed loop 4 runs within the main bar 1 around two pulleys 5 that are located at opposing ends of the main bar 1. The sliding bars 2 and 3 are slideably supported along the bottom side of the main bar 1 by sliders 6 and 7. In the shown embodiment the slider 6 of the first sliding bar 2 is attached to a lower elongated section of the closed loop 4 and the slider 7 of the second sliding bar 3 is attached to an upper elongated section of the closed loop 4. The closed loop 4 runs clockwise around the pulleys 5 and therefore the lower section moves to the left end of the main bar 1 and the upper section moves to the right end of the main bar 1. Additionally there may be provided guiding blocks 8 on each end of the main bar 1 that slideably engage with the sliding bar 2 and 3, which assist to stabilize the sliding movement of the sliding bars along the main bar.

The sliding bars are non-moveably attached to the sliders 6 and 7 at an inner end 9. An outer end 10 of the sliding bars 2 and 3 extends over the ends of the main bar 1. Each of the sliding bars 2 and 3 contains a second pulling means in form of a second closed loop that runs around two pulleys located at the inner and outer ends of the sliding bars. In the figures the second closed loop is located on the back side of the sliding bars and therefore is not visible in the figures. The second closed loop is fixed at one point relative to main bar 1, whereby the fixed point of the loop does not move relative to the main bar 1. For example the second closed loop is fixed at the guiding blocks 8.

Each of the sliding bars 2 and 3 comprises a carriage 12, which is slideably supported along its sliding bar. The carriages 12 are attached to the second closed loop to be transported by the closed loop along the length of the sliding bars. To do so, the carriages 12 are attached to the section of the closed loop, which moves outwards of the bar system towards the outer ends of the sliding bars. Therefore the carriages 12 are moved from the inner end 9 in direction of the outer end 10 of the sliding bars 2 and 3. Advantageously the combination of the two closed loops for moving a carriage 12 allows a velocity of moving the carriages 12 relative to the main bar 1 to be twice the velocity of moving the sliding bars 2 and 3 relative to the main bar 1. The carriages 12 support a coupling means in form of a strut 13 and a roller 14, which is rotatably supported on the extending end of the strut 13.

A collector module arrangement, as described in detail below, is held by attachment means 17 in form of a releasable connectors to each inner end 9 of the two sliding bars 2 and 3.

The main bar 1 comprises on its upper side a mounting 15, which is adapted to be hold by a lifting device, like a crane or so. Further the main bar 1 carries a drive and control unit 16, which may include for example an electric motor for driving the first closed loop 4 and remote control for operating the electric motor.

The apparatus is designed for folding and unfolding a collector module arrangement, which is composed of four collector modules arranged in a row: two inner modules 20 and two end modules 21. The inner modules 20 and end modules 21 are articulated with each other by a first side hinged part 22 between an end module 21 and an inner module 20, a middle hinged part 23 between the inner modules 20, and a second side hinged part 24 between an inner module 20 and an end module 21. The collector module arrangement is designed in a symmetric way to both sides of the middle hinged part. On a bottom side of the side hinged parts 22 and 24 supports 25 are extending downwards. In an unfolded state the module arrangement may rest on the supports 25 as will be explained in more detail below. At the end of the supports 25, at outer edges 26 of the end modules 21, and at the middle hinged part 23 bearing surfaces 27 are arranged along the width of the collector modules.

In figure 2 the collector module arrangement is in a folded state, in which it is easily stored away or transported to a construction site. The inner modules 20 and the end modules 21 essentially are positioned parallel to each other and the hinged parts are in a closed state. The apparatus according to the invention is in a retracted position, wherein the sliding bars 2 and 3 are stored below the main bar and the outer ends 10 of the sliding bars 2 and 3 barely extend over the ends of the main bar 1. The sliders 6 and 7 are located on their respective loop section at a middle section of the main bar 1. Therefore also the inner ends 9 of the sliding bars 2 and 3, held by the sliders 6 and 7, are located opposite to each other in a middle section of the main bar 1. The carriages 12 are located at the inner ends 9 of the sliding bars 2 and 3 close to each other.

The collector module arrangement is releasably attached to the folding apparatus in that the first side hinged part 22 is attached to the attachment means 17 of the first sliding bar 2 and the second side hinged part 24 is attached to the attachment means 17 of the second sliding bar 3. The middle hinged part 23 is not attached to the apparatus. The struts 13 on the carriages 12 extend downward and towards the end modules 21. The rollers 14 at the end of the struts 13 are engaged on the bottom side of the end modules 21 and couple the end modules 21 to the carriages 12.

In the configuration of figure 2 the apparatus may be grabbed at the mounting 15 and transported to a predetermined area over a surface that is to be covered by collector modules while the collector module arrangement is hanging at the apparatus. The coupling of the collector module arrangement is arranged at the centre of the bar system and therefore the configuration is stable when during movement of apparatus.

While transporting the collector module arrangement to the predetermined area the apparatus is activated for unfolding the module arrangement into an unfolded state as shown in figure 3. This is accomplished by activating the first closed loop 4 by starting the drive and control unit 16. When the first closed loop 4 starts rotating the slider 6 moves the first sliding bar 2 to the left and the slider 7 moves the second sliding bar 3 to the right as shown via the intermediate position as shown in figure 1 to the their end positions as shown in figure 3. This movement already opens the hinged parts 22, 23, and 24. By sliding the sliding bars 2 and 3 along the main bar 1 the second closed loop is rotate because it is fixed to the main bar a. The rotation of the second closed loop transports the carriages 12 from their position at the inner ends 9 to a position at the outer ends 10 of the sliding bars 2 and 3. Together with the carriages 12 the struts 13 travel outwards of the bar system and relative to the end modules 21. Thereby the rollers 14 are pulled along the back side of the end modules 21. Because the carriages 12 and the rollers 14 move faster than the module arrangement, in particular the end modules 21, the rollers 14 are pulled along the back side of the end modules 21. Thus, the side hinged parts 22 and 24 are opened and the edges 26 of the end modules 21 are lifted upwards in direction of the bar system. This movement continues until the carriages 12 are stopped at the outer end of the sliding bars 2 and 3 and the slider 6 and 7 are stopped at the ends of the main bar 1. Then the collector module arrangement is in a fully unfolded state. The opening angles of the hinged parts can be determined by the moving distance of the sliding bars and the carriages. In turn the maximum moving distance of the sliding bars and the carriages can be defined by the length of the main bar and the sliding bars. It is advantageous to choose a length of the fully extended bar system that is at least as long as the unfolded state of the module arrangement.

As can be seen in figure 3 the collector module arrangement is symmetrically unfolded to both sides and is ready to be positioned on the predetermined area. The bearing surfaces 27 are orientated horizontally.

Now the unfolded module arrangement can be detached from the attachment means 17 and uncoupled from the struts 13. This could be done by hand or automatically. On the ground the module arrangement can be weight down by placing for example stones on the bearing surfaces 27. The apparatus may be carried away by the lifting device and can be retracted for being prepared for unfolding a next collector module arrangement.

To remove a collector module arrangement from a collector module field the apparatus may be arranged in an extended position over with the sliding bars 2 and 3, the carriages 12 and the sliders 6 and 7 in their outer positions. Then the unfolded module arrangement can be attached to the attachment means 17 and the struts 13. By moving the first closed loop 4 in the opposite direction the sliding bars 2 and 3 and the carriages 12 are retraced to their position central to the main bar and the module arrangement is folded up.

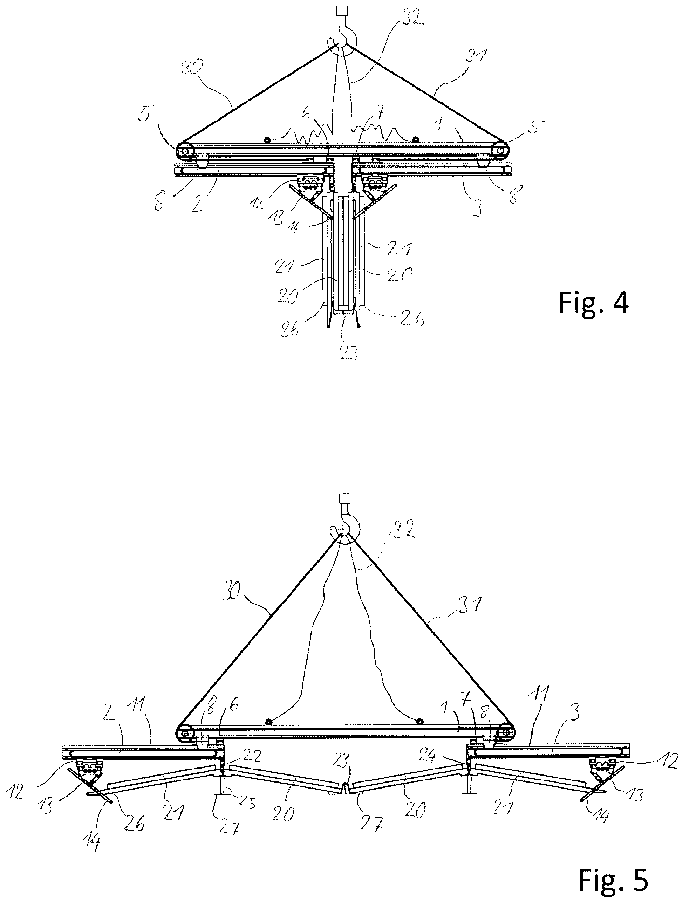

Figures 4 and 5 show a second version of the apparatus according to the invention in a retracted position (figure 4) with the module arrangement in a folded state, and an extended position (figure 5) with the module arrangement in an unfolded state. Basically the second version is a variant of the first version, wherein the first pulling means comprises two main ropes 30 and 31 instead of the first closed loop. One end of the first main rope 30 is attached to the slider 6. The main rope 30 is guided around the pulley 5 on the outer edge of the main bar 1 and deflected upwards to the upper side of the main bar. Correspondingly the second main rope 31 is attached to the slider 7. The main rope 31 is guided around the pulley 5 on the opposite outer edge of the main bar 1 and deflected upwards to the upper side of the main bar. Thus the main ropes 30 and 31 can be used to slide the sliding bars 2 and 3 along the main bar 1 and also to actuate the second closed loop 11 within the sliding bars. Therefore the unfolding mechanism is equivalent to the unfolding mechanism of the first version.

The free ends of the main ropes 30 and 31 can be hooked up on a crane or the like. As soon as the crane starts lifting, first the main ropes are initiated to pull the sliders 6 and 7 with the sliding bars 2 and 3 along the main bar 1 and the collector module arrangement starts unfolding. As soon as the sliders 6 and 7 are blocked at the outer ends of the main bar 1 the main ropes 30 and 31 start carrying the collector module arrangement for transport to a predetermined place, while the collector module arrangement is already unfolded. To facilitate the coordination between the unfolding action and the lifting action of the collector module arrangement when lifting the crane a retardation unit is provided which slows down the movement of the sliders 6 and 7 along the main bar 1. Also the retardation unit may return back the sliders 6 and 7 to their initial position. Thus the unfolded collector module arrangement may be lightened from the ground before the unfolding action starts. Furthermore a safety line 32 may be installed on the main bar 1 to catch the collector module arrangement in case the main ropes fail.

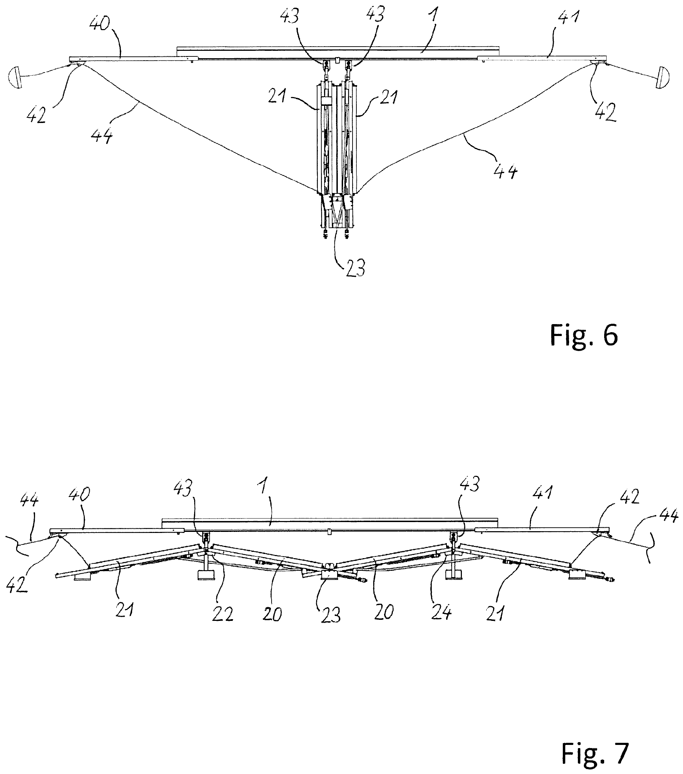

Figures 6 and 7 show a third version of the apparatus according to the invention in a retracted position (figure 6) with the module arrangement in a folded state, and an extended position (figure 7) with the module arrangement in an unfolded state. The apparatus comprises a main bar 1 with telescopic side bars 40 and 41, which are in an extended position. However the main bar 1 also could be realized as one elongated horizontal carrier.

The side hinged parts 22 and 24 are attached to skids 43 that are slideably along the bottom side of the main bar 1. Each of the outer ends of the side bars 40 and 41 comprises a roller 42. The pulling arrangement includes two pulling ropes 44, each of which is attached with a first end to an edge part of an end module 21 of the module arrangement and is deflected by the roller 42 to the side of the apparatus. Thus the free end of the pulling ropes 44 can be pulled to lift the edges 26 of the end module and open the side hinged parts 22 and 24 of the module arrangement. By further pulling of the pulling ropes 44 the skids 43 start sliding along the main bar 1 and open the middle hinged part 23 of the collector module arrangement as shown in figure 7.

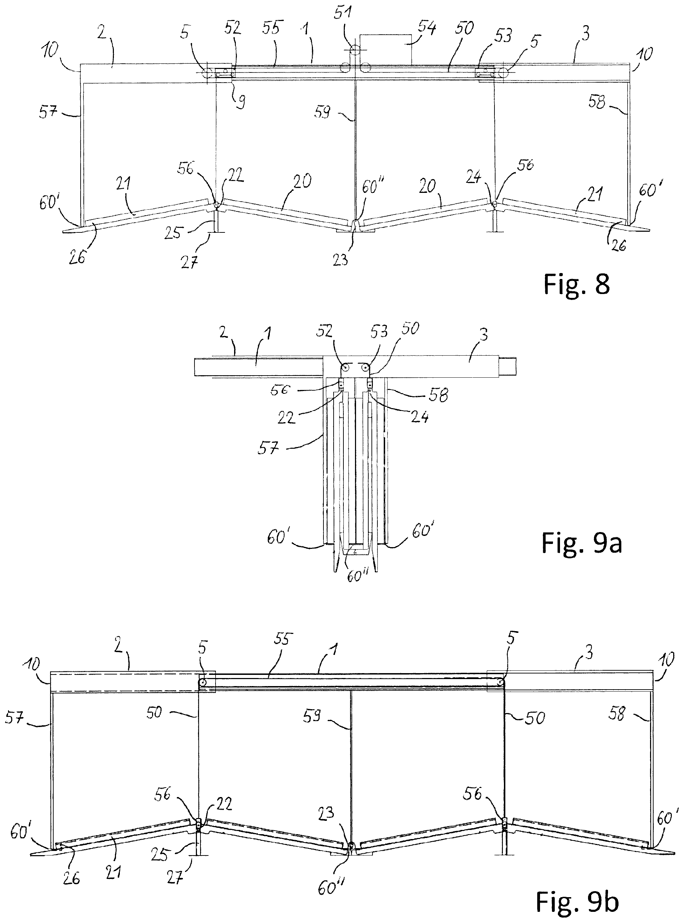

Figures 8 to 10 show a fourth version of the apparatus according to the invention. Figure 8 depicts a schematic view of structure of the apparatus in a nearly extended position. Figures 9a and 9b depict a side view of a construction drawing of the apparatus in a retracted position with a folded collector module arrangement (figure 9a) and in a fully extended position with an unfolded collector module arrangement (figure 9b).

The apparatus comprises a main bar 1, a first sliding bar 2 and a second sliding bar 3, which together form a bar system of the apparatus. Further the apparatus comprises a first pulling means in form of a flexible elongated wire 50. The wire 50 originates from a reel 51 which is rotatably mounted on the main bar 1. The reel 51 winds up or down the wire 50 beginning from a middle region of the wire. The two ends of the wire 50 run from the reel 51 to a guiding block 52, 53 which guiding blocks are slideably arranged on the main bar 1. The guiding blocks 52, 53 guide the wire 50 downwards such that the wire ends extend from the bar system. The guiding blocks may be attached to rails within the main bar 1 so that they can slide along these rails. The guiding blocks 52, 53 may comprise several pulleys for guiding the wire 50. An electrical motor 54 runs the wire 50 such that the wire ends are vertically lifted up and down relative to the bar system. Each wire end comprises an attachment means 56 for attaching a first side hinged part 22 and a second side hinged part 24 located on the upper side of the collector module arrangement to the folding apparatus.

A second pulling means in form of a closed loop 55, which basically corresponds to the closed loop 4 of the first version of the apparatus shown in figures 1 to 3, runs around two pulleys 5 located at outer ends of the main bar 1. The closed loop 55 may be driven by the motor 54. The guiding blocks 52, 53 are attached to the closed loop 55 such that they run in opposite directions of the main bar a, when the closed loop 55 runs around the pulleys 5.

The sliding bars 2 and 3 may partly surround or incorporate the main bar 1. The sliding bars 2 and 3 are slideably supported on sliding tracks of the main bar 1. Advantageously the sliding bars 2 and 3 are attached to the guiding blocks 52, 53 such that they can move to opposite ends of the main bar 1 when the closed loop 50 circulates. Alternatively the sliding bars 2 and 3 may be attached directly to the closed loop.

The bar system comprises extensions extending downwards from the bar system towards the collector module arrangement. First extensions 57, 58 extend downwards from an outer end 10 of the two sliding bars 2 and 3 and a second extension 59 extends downwards from the main bar 1. The second extension 59 is positioned in the centre region of the main bar 1, preferably in the middle of the main bar. The extensions may be elongated rods or plates that essentially run vertically downwards from the bar system. The length of the extensions is determined by the heights of a folded collector module arrangement. The ends of the extensions shall extend to the lower side of the folded collector module arrangement. When lifting up the folded collector module arrangement the first extensions 57, 58 enclose the arrangement from opposing sides. The second extension 59 reaches between the inner modules 20 down to the middle hinged part 23. Thus the extension also assist to stabilize and guide the collector module arrangement during the lifting process.

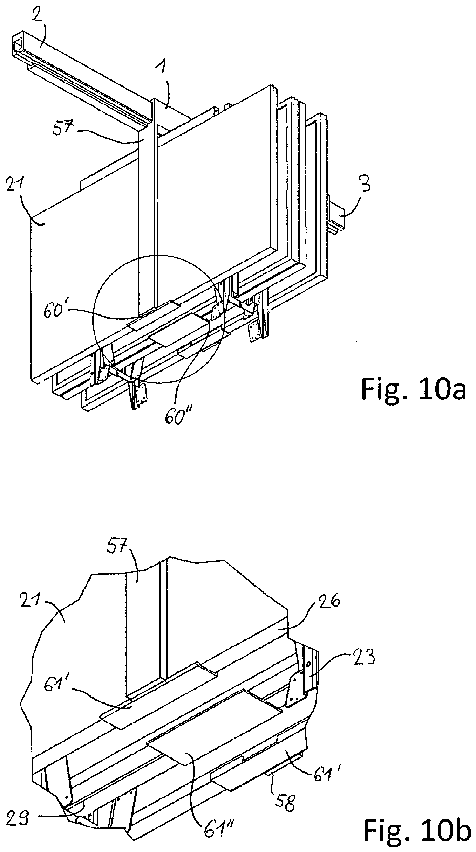

At their end regions the extensions 57, 58 and 59 comprise coupling means 60 for coupling the collector module arrangement to the folding apparatus. The coupling means 60 are vertically fixed relative to the bar system at a position and height on the extensions such that they can couple to a bottom end of the collector module arrangement. The coupling means 60' releasably attach to the lower end of the end modules 21. The coupling means 60" releasably attaches the middle hinged part 23 located at a lower side of the collector module arrangement. The coupling means are shown in more detail in figures 10a and 10b.

As shown in figure 9a in the beginning the apparatus is in a retracted position, wherein the sliding bars 2 and 3 are positioned with their inner ends 9 in the centre region of the main bar 1. In this position the guiding blocks 52, 53 are positioned close to each other roughly at a distance that corresponds to the distance of the side hinged parts 22 and 24 of the folded collector module arrangement. The attachment means 56 are attached to the upper side hinged parts 22 and 24. The ends of the first pulling means in form of the wire 50 are fully pulled upwards such that the first extensions 57, 58 enclose the collector module arrangement and the second extensions 59 extends down to the middle hinged part 23. In this position the coupling means 60 couple to the lower end of the collector module arrangement as described above.

In figure 9b the apparatus is in a fully extended position and the collector module arrangement is fully unfolded. For unfolding the collector module arrangement the attachment means 56 holding the first and the second side hinged parts 22, 24 are lowered by reeling off the wire 50. The coupling means 60 remain vertically fixed relative to the bar system. The own weight of the collector module arrangement is sufficient to open the side hinged parts. The ends of the end modules 21 and the middle hinged part 23 stay on the same vertical level. Thus, the opening of the side hinged parts results in the opening of the middle hinged part 23. Simultaneously the sliding bars 2 and 3 slide outwards to opposite ends of the main bar 1, whereby the horizontal distance between the extensions 57 and 58 is enlarged. Further the guiding blocks 52, 53 move to opposite ends of the main bar 1 driven by the closed loop 55 such that their position remains vertical above the position of the first and the second side hinged part 22, 24.

In the fully unfolded state the collector module arrangement is position on a desired spot as described for the previous versions of the apparatus and the attachment means 56 for attaching the first and the second side hinged parts 22 and 24 and the coupling means 60 are released. The sliding bars 2 and 3 can be retracted to the starting position by the closed loop 55. Also the ends of the wire 50 are wound up on the reel 51 to get ready for unfolding a next collector module arrangement.

Figure 10a shows an overview of the folded collector module arrangement pulled up to the bar system from a bottom view. As can be seen the extension 57 reaches down to the bottom side of the collector module arrangement and the coupling means 60' engages with the end region of the end module 21. Figure 10b shows a detail A of figure 10a enlarging the area of the coupling means 60. The coupling means 60 comprise a snap fit in form of an elastic abutment 61 at the end regions of extensions 57, 58, 59. The abutments 61, for example in form of plates, are elastically deflected, for example by the uplifting of the collector module arrangement. The abutments 61 automatically snap behind edges 26 of the lower end of the end modules 21 and of the middle hinged part 23 when they pass the abutments 61 and give some free space for the abutments to relax from their deflected state. The abutments 61' snap behind the edge 26 of the end module 21. The abutment 61" snaps behind edges 29 in the range of the middle hinged part 23. In this position the folded collector module arrangement can safely be transported to a desired spot. The collector module arrangement can be unfolded above the desired spot or may be unfolded while being transported by a crane or the like to the desired spot. The apparatus may for example comprise a mounting 15 as described before to be picked up by a crane or the like.

As mentioned before for the first or second version of the apparatus the pulling arrangement may be activated by a remote control.

Apart from the description of the fourth version of the apparatus as given above same reference numbers of previous versions of the apparatus are used for elements of the same function in the present version, like for example the supports 25 and the bearing surface 27.

**Reference Numbers**

| | | | |
|---|---|---|---|
| 1 | main bar | 26 | edge of end module |
| 2 | first sliding bar | 27 | bearing surface |
| 3 | second sliding bar | 29 | edge of middle hinged part |
| 4 | first closed loop | 30 | main rope |
| 5 | pulley | 31 | main rope |
| 6 | slider | 40 | side bar |
| 7 | slider | 41 | side bar |
| 8 | guiding blocks | 42 | roller |
| 9 | inner end | 43 | skid |
| 10 | outer end | 44 | pulling rope |
| 11 | second closed loop | 50 | wire |
| 12 | carriage | 51 | reel |
| 13 | strut | 52 | guiding block |
| 14 | roller | 53 | guiding block |
| 15 | mounting | 54 | motor |
| 16 | drive / control unit | 55 | closed loop |
| 17 | attachment means | 56 | attachment means |
| 20 | inner module | 57 | first extension |
| 21 | end module | 58 | first extension |
| 22 | first side hinged part | 59 | second extension |
| 23 | middle hinged part | 60, 60', 60" | coupling means |
| 24 | second side hinged part | 61, 60', 61" | abutment |
| 25 | support | | |

## Claims

1. Apparatus for unfolding a foldable collector module arrangement which comprises four collector modules (20, 21) coupled in a row by two side hinged parts (22, 24) and a middle hinged part (23) between adjacent modules such that in a folded state the modules are arranged essentially parallel to each other and in an unfolded state the modules are arranged in a zig-zag or flat form from a folded state to an unfolded state, wherein the apparatus comprises
- a horizontal carrier, to which the collector module arrangement is attached in a hanging position,
- attachment means (17; 56) for releasably attaching the hinged parts (22, 23, 24) of the collector module arrangement to the apparatus, that are moveably arranged relative to the horizontal carrier,
- coupling means (13, 14; 60) for releasably coupling the collector modules (20, 21) and/or the hinged parts (22, 23, 24) of the collector module arrangement to the horizontal carrier, that are slideably arranged on the horizontal carrier, and
- a pulling arrangement (4, 11; 50, 55) attached to the attachment means (17; 56) and/or the coupling means (13, 14; 60) for moving the attachment means (17; 56) and/or the coupling means (13, 14; 60) relative to the horizontal carrier, wherein
- when unfolding the collector module arrangement the pulling arrangement (4, 11; 50, 55) is activated for opening the hinged parts (22, 23, 24) of the collector module arrangement by movement of the attachment means (17; 56) and/or the coupling means (13,14;60), such that before unfolding the collector module arrangement the apparatus with the suspended module array is suitable to be lifted to a predetermined area on which the collector module arrangement shall be installed.

2. Apparatus according to claim 1, wherein the horizontal carrier comprises,
- a horizontal main bar (1) and
- two sliding bars (2, 3) slidably supported on the main bar (1) such, that the sliding bars (2, 3) slide in opposite direction along the main bar (1) from a retracted position to an extended position protruding over the main bar (1) and wherein
- the attachment means (17; 56) are arranged at a centre region of the main bar (1) or at an inner end (9) of each sliding bar (2; 3) in a slidably manner, and
- coupling means (13, 14; 60) are arranged on each sliding bar (2; 3) for releasably coupling the collector modules (20, 21) to the sliding bar (2; 3).

3. Apparatus according to one of claims 1 or 2, wherein
- the coupling means (13, 14) are arranged for coupling each end module (21) of the collector module arrangement to the carrier,
- the pulling arrangement (4, 11) is deflected at both ends of the carrier and attached to the coupling means (13, 14) for sliding the attachment means (17) and the coupling means (13, 14) along the carrier for opening the hinged parts (22, 23, 24) of the collector module arrangement and for lifting an outer edge (26) of the end modules (21) in direction of the carrier by pulling the pulling arrangement (4, 11).

4. Apparatus according to one of the claims 2 to 3, which further comprises
- two carriages (12), each of which slideably supported on a sliding bar (2, 3) such, that the carriages (12) slide in opposite direction along their sliding bar (2; 3) from an inner end (9) to an outer end (10) of the sliding bar (2; 3), wherein
- the attachment means (17) is provided at an inner end (9) of each sliding bar (2; 3) for releasably attaching the collector module arrangement to the inner end (9) of the sliding bar (2; 3) at a hinged part (22, 24) of the module arrangement, and
- the pulling arrangement comprises a first pulling means (4) for pulling the sliding bars (2, 3) along the main bar (1), and a second pulling means (11) for pulling the carriages (12) along their sliding bar (2; 3) such, that an outer edge (26) of the end module (21) is lifted in direction of the sliding bar (2; 3), wherein
- by pulling the first pulling means (4) and the second pulling means (11), the sliding bars (2, 3) slide away from each other and the carriages (12) slide away from each other, whereby the foldable collector module is unfolded by opening the hinged parts (22, 23, 24) of the collector module and lifting the outer edge (26) of the end modules (21).

5. Apparatus according to claim 4, wherein the second pulling means comprises a closed loop (11) circulating around two pulleys on opposing ends of the sliding bar and fixed at one point relative to the main bar (1), and arranged such that the closed loop (11) is driven by movement of the sliding bars (2; 3).

6. Apparatus according to one of the claims 4 or 5, wherein the coupling means comprises at least one strut (13) extending from the carriage (12) with one end towards the module arrangement, wherein said strut end carries a roller (14) which engages with the end module (21) of the module arrangement on a back side of the end module (21).

7. Apparatus according to one of claims 5 or 6, wherein the first pulling means comprises at least one closed loop (4) circulating around two pulleys (5) on opposing ends of the main bar (1) and wherein each of the sliding bars (2; 3) is coupled to one of two loop sections of the closed loop (4) that are running in contrary towards each other.

8. Apparatus according to one of claims 5 to 6, wherein the main bar (1) comprises two pulleys (5) on opposing ends and the first pulling means comprises two main ropes (30, 31), each of the main ropes is attached to one of the sliding bars (2, 3) and deflected by a pulley (5) to the upper side of the main bar.

9. Apparatus according to one of claims 1 or 2, wherein a roller is arranged on each outer end of the carrier and the pulling arrangement comprises
- two pulling ropes, each of which is attached with a first end to an edge part of an end module of the module arrangement and is deflected by the roller on its side, whereby a second end of the second pulling rope can be pulled to lift the edge part of the end module of the module arrangement and
- a further pulling rope attached with a first end to a middle hinged part (23) of the module arrangement, wherein the further pulling rope is deflected by a first roller arranged on a middle section of the carrier and a second roller arranged at an outer end of the carrier, whereby a second end of the further pulling rope can be pulled to lift the middle hinged part of the module arrangement.

10. Apparatus according to one of claims 1 or 2, wherein
- the attachment means (56) are vertically moveable relative to the carrier and designed for being releasably attached to side hinged parts (22, 24) located at an upper end of the folded collector module arrangement,
- the coupling means (60) are vertically fixed relative to the carrier and are designed for being releasably attached to a lower end of the end modules (21) and to a middle hinged part (23) located at a lower end of the folded collector module arrangement,
- the pulling arrangement (50, 55) is attached to the attachment means (56) for vertical movement of the attachment means (56) relative to the carrier and relative to the coupling means (60) for opening the hinged parts (22, 23, 24) of the collector module arrangement by lowering the attachment means (56) relative to the coupling means (60).

11. Apparatus according to claim 10, wherein the carrier comprises first extensions (57, 58) extending downwards from an outer end (10) of two sliding bars (2; 3) of the carrier and
- a second extension (59) extending downwards from a main bar (1) of the carrier and wherein the coupling means (60) are arranged on end regions of the first and second extensions (57, 58, 59).

12. Apparatus according to one of claims 10 or 11 wherein the pulling arrangement comprises
- a first pulling means in form of flexible elongated means (50) guided by two guiding blocks (52, 53) arranged on the carrier, wherein ends of the first pulling means are coupled to the attachment means (56) and
- a second pulling means (55) for pulling the guiding blocks (52, 53) to opposite ends along the carrier, wherein the second pulling means (55) comprises a closed loop (55) circulating around two pulleys (5) on opposite ends of the main bar (1).

13. Method for setting up a foldable collector module arrangement which comprises four collector modules (20, 21) coupled in a row by two side hinged parts (22, 24) and a middle hinged part (23) between adjacent modules such that in a folded state the modules are arranged essentially parallel to each other and in an unfolded state the modules are arranged in a zig-zag or flat form, the method includes unfolding the foldable collector module arrangement from a folded state to an unfolded state using an apparatus according to one of claims 1 to 12, by using the following steps:
- releasably attaching in a hanging position a first side hinged part (22) of the module arrangement at a first attachment means (17, 56) and a second side hinged part (24) of the module arrangement at a second attachment means (17, 56),
- releasably coupling a first end module (21) next to the first side hinged part (22) to a first coupling means (13, 14; 60') and coupling a second end module (21) next to the second side hinged part (24) to a second coupling means (13, 14, 60'), and optionally coupling a middle hinged part (23) to a third coupling means (60"),
- activating the pulling arrangement (4, 11; 50, 55) for moving the attachment means (17, 56) and/or the coupling means (13, 14, 60) relative to the carrier for opening the hinged parts (22, 23, 24),
- releasing the attachment means (17; 56) and the coupling means (13, 14; 60) from the collector module arrangement, when the collector module arrangement has reached its unfolded state.

14. Method for setting up a foldable collector module arrangement according to claim 13 by using an apparatus according to one of claims 4 to 8, by using the following steps:
- releasably attaching a first side hinged part (22) of the module arrangement at an inner end (9) of a first sliding bar (2) and a second side hinged part (24) of the module arrangement at an inner end (9) of a second sliding bar (3),
- releasably coupling a first end module (21) next to the first side hinged part (22) to a carriage (12) of the first sliding bar (2) and coupling a second end module (21) next to the second side hinged part (24) to a carriage (12) of the second sliding bar (3) by the coupling means (13, 14),
- pulling the first pulling means (4) for pulling the sliding bars (2, 3) along the main bar (1) and for opening the hinge parts (22, 23, 24),
- pulling the second pulling means (11) for pulling the carriages (12) along the sliding bars (2, 3) and for lifting the end modules (21), and
- releasing the attachment means (17) for attaching the first and the second side hinged parts (22, 24) and releasing the coupling means (13, 14) for coupling the first and the second end module (21) to the carriage (12).

15. Method according to one of claims 13 or 14, wherein the apparatus with the attached collector module arrangement is lifted up by a crane, which actuates the pulling arrangement, when lifting up the collector module arrangement, such that the module arrangement is unfolded in a hanging position.

16. Method for setting up a foldable collector module arrangement according to claim 13 by using an apparatus according to one of claims 10 to 12, by using the following steps:
- lifting up the collector module arrangement attached to the attachment means (56) by vertically lifting the first and the second side hinged part (22, 24) by the pulling arrangement (50) until the collector module arrangement is positioned for coupling with the coupling means (60) of the apparatus,
- releasably coupling the coupling means (60) to a lower end of the end modules (21) and to a middle hinged part (23) located at a lower end of the folded collector module arrangement,
- lowering the first and the second side hinged part (22, 24) by the pulling arrangement (50), wherein the coupling means (60) remain vertically fixed, whereby the coupling means (60') slide outwards along the carrier and the collector module arrangement unfolds due to the own weight of the collector module arrangement, and
- releasing the attachment means (56) for attaching the first and the second side hinged parts (22, 24) and releasing the coupling means (60) for coupling the collector module arrangement.

17. Method according to claim 16, wherein the coupling means (60) comprise a snap fit (61) at the end regions of extensions (57, 58, 59) of the carrier, which automatically snaps into the lower end of the end modules (21) and into the middle hinged part (23) located at the lower end of the folded collector module arrangement, when they pass the snap fits.

18. Method for setting up a foldable collector module arrangement which comprises four collector modules coupled in a row by two side hinged parts and a middle hinged part between adjacent modules such that in a folded state the modules are arranged essentially parallel to each other and in an unfolded state the modules are arranged in a zig-zag form, the method includes unfolding the foldable collector module arrangement from a folded state to an unfolded state using an apparatus according to claim 9 , by using the following steps:
- releasably attaching side hinged parts to skids running along the carrier,
- releasably coupling an edge part of a first end module of the module arrangement to an end of a first pulling rope
- releasably coupling an edge part of a second end module of the module arrangement to an end of a second pulling rope
- pulling the first and the second pulling means for sliding the skids to outer ends of the carrier and for lifting the edge part of the end modules of the module arrangement, and
- releasing the attachment means and the coupling means.

## Patentansprüche

1. Vorrichtung zum Entfalten einer faltbaren Kollektormodulanordnung, welche vier Kollektormodule (20, 21) umfasst, die von zwei seitlichen Gelenkelementen (22, 24) und einem mittleren Gelenkelement (23) zwischen benachbarten Modulen in einer Reihe verbunden sind, von einem gefalteten in einen entfalteten Zustand, so dass die Module in dem gefalteten Zustand im Wesentlichen parallel zueinander angeordnet sind und die Module in einem entfalteten Zustand in einer Zig-Zag-Form oder flachen Form angeordnet sind, wobei die Vorrichtung umfasst
- einen horizontalen Träger, an welchem die Kollektormodulanordnung in einer hängenden Position befestigt ist,
- Befestigungsmittel (17; 56) zum lösbaren Befestigen der Gelenkelemente (22, 23, 24) der Kollektormodulanordnung an der Vorrichtung, welche relativ zu dem horizontalen Träger beweglich angeordnet sind,
- Verbindungsmittel (13, 14; 60) zum lösbaren Verbinden der Kollektormodule (20, 21) und/oder der Gelenkelemente (22, 23, 24) der Kollektormodulanordnung mit dem horizontalen Träger, welche verschieblich an dem horizontalen Träger angeordnet sind, und
- eine Zuganordnung (4, 11; 50, 55), welche an den Befestigungsmitteln (17; 56) und/oder den Verbindungsmitteln (13, 14; 60) befestigt ist, um die Befestigungsmittel (17; 56) und/oder die Verbindungsmittel (13, 14; 60) relativ zu dem horizontalen Träger zu bewegen, wobei
- beim Entfalten der Kollektormodulanordnung die Zuganordnung (4, 11 ; 50, 55) aktiviert ist, um die Gelenkelemente (22, 23, 24) der Kollektormodulanordnung durch Bewegung der Befestigungsmittel (17; 56) und/oder der Verbindungsmittel (13, 14; 60) zu öffnen, so dass vor Entfalten der Kollektormodulanordnung die Vorrichtung mit der daran hängenden Modulanordnung eingerichtet ist, um zu einer vorbestimmten Fläche angehoben zu werden, auf welcher die Kollektormodulanordnung installiert werden soll.

2. Vorrichtung nach Anspruch 1, wobei der horizontale Träger umfasst,
- einen horizontalen Hauptbalken (1) und
- zwei Gleitbalken (2, 3), welche gleitend an dem Hauptbalken (1) gelagert sind, so dass die Gleitbalken (2, 3) in entgegengesetzter Richtung entlang des Hauptbalkens (1) aus einer eingezogenen Position in eine ausgestreckte Position, über den Hauptbalken (1) vorstehend, gleiten und wobei
- die Befestigungsmittel (17; 56) in einem zentralen Bereich des Hauptbalkens (1) oder an einem inneren Ende (9) jedes Gleitbalkens (2; 3) in einer gleitenden Weise angeordnet sind, und
- Verbindungsmittel (13, 14; 60) an jedem Gleitbalken (2; 3) angeordnet sind, um die Kollektormodule (20, 21) mit den Gleitbalken (2; 3) lösbar zu verbinden.

3. Vorrichtung nach einem der Ansprüche 1 oder 2, wobei
- die Verbindungsmittel (13, 14) angeordnet sind, um jedes Endmodul (21) der Kollektormodulanordnung mit dem Träger zu verbinden,
- die Zuganordnung (4, 11) an beiden Enden des Trägers umgelenkt und an den Verbindungsmitteln (13, 14) befestigt ist, um die Befestigungsmittel (17) und die Verbindungsmittel (13, 14) entlang des Trägers zum Öffnen der Gelenkelemente (22, 23, 24) der Kollektormodulanordnung zu verschieben und um eine äussere Kante (26) der Endmodule (21) in Richtung des Trägers durch Ziehen der Zuganordnung (4, 11) anzuheben.

4. Vorrichtung nach einem der Ansprüche 2 bis 3, welche weiter umfasst,
- zwei Schlitten (12), wobei jeder an einem Gleitbalken (2, 3) gleitend gelagert ist, so dass die Schlitten (12) in entgegengesetzte Richtung entlang ihrer Gleitbalken (2; 3) von einem inneren Ende (9) zu einem äusseren Ende (10) des Gleitbalkens (2; 3) gleiten, wobei
- das Befestigungsmittel (17) an einem inneren Ende (9) jedes Gleitbalkens (2; 3) vorgesehen ist, um die Kollektormodulanordnung an dem inneren Ende (9) des gleitenden Balkens (2; 3) an einem Gelenkelement (22, 24) der Modulanordnung lösbar zu befestigen, und
- die Zuganordnung ein erstes Zugmittel (4) umfasst, um die Gleitbalken (2, 3) entlang des Hauptbalkens (1) zu ziehen und ein zweites Zugmittel (11), um die Schlitten (12) entlang ihrer Gleitbalken (2; 3) zu ziehen, so dass eine äussere Kante (26) des Endmodules (21) in Richtung des Gleitbalkens (2; 3) angehoben ist, wobei
- durch Ziehen des ersten Zugmittels (4) und des zweiten Zugmittels (11), die Gleitbalken (2, 3) voneinander weggleiten und die Schlitten (12) voneinander weggleiten, wobei das faltbare Kollektormodul durch Öffnen der Gelenkmittel (22, 23, 24) der Kollektormodule geöffnet ist und die äussere Kante (26) der Endmodule (21) angehoben ist.

5. Vorrichtung nach Anspruch 4, wobei das zweite Zugmittel eine geschlossene Schlaufe (11) umfasst, welche um zwei Umlenkrollen an entgegengesetzten Enden der Gleitbalken verläuft und an einem Punkt relativ zu dem Hauptbalken (1) fixiert ist, und angeordnet ist, so dass die geschlossene Schlaufe (11) durch Bewegung der Gleitbalken (2; 3) angetrieben ist.

6. Vorrichtung nach einem der Ansprüche 4 oder 5, wobei das Verbindungsmittel zumindest eine Strebe (13) umfasst, welche sich von dem Schlitten (12) mit einem Ende gegen die Modulanordnung erstreckt, wobei das Strebenende eine Rolle (14) umfasst, welche mit dem Endmodul (21) der Modulanordnung an einer Rückseite des Endmoduls (21) in Kontakt steht.

7. Vorrichtung nach einem der Ansprüche 5 oder 6, wobei das erste Zugmittel mindestens eine geschlossene Schlaufe (4) umfasst, welche um zwei Umlenkrollen (5) an entgegengesetzten Enden des Hauptbalkens (1) verläuft und wobei jeder Gleitbalken (2; 3) mit einem von zwei Schlaufenabschnitten der geschlossenen Schlaufe (4) verbunden ist, welche entgegengesetzt zueinander laufen.

8. Vorrichtung nach einem der Ansprüche 5 bis 6, wobei der Hauptbalken (1) an entgegengesetzten Enden zwei Umlenkrollen (5) umfasst, und das erste Zugmittel zwei Hauptseile (30, 31) umfasst, wobei jedes der Hauptseile an einem der Gleitbalken (2, 3) befestigt und von einer Umlenkrolle (5) zu der oberen Seite des Hauptbalkens umgelenkt ist.

9. Vorrichtung nach einem der Ansprüche 1 oder 2, wobei eine Rolle an jedem äusseren Ende des Trägers angeordnet ist und die Zuganordnung umfasst
- zwei Zugseile, wobei jedes mit einem ersten Ende an einem Kantenbereich eines Endmodules der Modulanordnung befestigt ist und von der Rolle an seiner Seite umgelenkt ist, wobei an einem zweiten Ende des zweiten Ziehseils gezogen werden kann, um den Kantenbereich des Endmoduls der Modulanordnung anzuheben und
- ein weiteres Zugseil, welches mit einem ersten Ende an einem mittleren Gelenkelement (23) der Modulanordnung befestigt ist, wobei das weitere Zugseil von einer ersten Rolle umgelenkt ist, welche an einem mittleren Abschnitt des Trägers angeordnet ist, und einer zweiten Rolle, welche an einem äusseren Ende des Trägers angeordnet ist, wobei an einem zweiten Ende des weiteren Zugseils gezogen werden kann, um das mittlere Gelenkelement der Modulanordnung anzuheben.

10. Vorrichtung nach einem der Ansprüche 1 oder 2, wobei
- die Befestigungsmittel (56) vertikal beweglich relativ zu dem Träger sind und gestaltet sind, um lösbar an den seitlichen Gelenkelementen (22, 24) befestigt zu sein, welche an einem oberen Ende der gefalteten Kollektormodulanordnung angeordnet sind,
- die Verbindungsmittel (60) vertikal fixiert relativ zu dem Träger sind und gestaltet sind, um lösbar an einem unteren Ende der Endmodule (21) und an einem mittleren Gelenkelement (23) befestigt zu sein, angeordnet an einem unteren Ende der gefalteten Kollektormodulanordnung,
- die Zuganordnung (50, 55) an den Befestigungsmitteln (56) befestigt ist, um die Befestigungsmittel (56) vertikal relativ zu dem Träger und relativ zu den Verbindungsmitteln (60) zu bewegen, um die Gelenkelemente (22, 23, 24) der Kollektormodulanordnung durch Absenken der Befestigungsmittel (56) relativ zu den Verbindungsmitteln (60) zu öffnen.

11. Vorrichtung nach Anspruch 10, wobei der Träger erste Verlängerungen (57, 58) umfasst, welche sich von dem äusseren Ende (10) der zwei Gleitbalken (2; 3) des Trägers nach unten erstrecken, und
- eine zweite Verlängerung (59), welche sich von einem Hauptbalken (1) des Trägers nach unten erstreckt und wobei die Verbindungsmittel (60) an Endbereichen der ersten und zweiten Verlängerungen (57, 58, 59) angeordnet sind.

12. Vorrichtung nach einem der Ansprüche 10 oder 11, wobei die Zuganordnung umfasst
- ein erstes Zugmittel in Form eines flexiblen, langgestreckten Mittels (50), welches von zwei Führungsblöcken (52, 53) geführt ist, die an dem Träger angeordnet sind, wobei Enden des ersten Zugmittels mit den Befestigungsmitteln (56) verbunden sind, und
- ein zweites Zugmittel (55) zum Ziehen der Führungsblöcke (52, 53) entlang des Trägers zu entgegengesetzten Enden, wobei das zweite Zugmittel (55) eine geschlossene Schlaufe (55) umfasst, welche um zwei Umlenkrollen (5) an entgegengesetzten Enden des Hauptbalkens (1) verläuft.

13. Verfahren zum Aufstellen einer faltbaren Kollektormodulanordnung, welche vier Kollektormodule (20, 21) umfasst, die von zwei seitlichen Gelenkelementen (22, 24) und einem mittleren Gelenkelement (23) zwischen benachbarten Modulen in einer Reihe verbunden sind, so dass die Module in einem gefalteten Zustand im Wesentlichen parallel zueinander und die Module in einem entfalteten Zustand in einer Zig-Zag- oder flachen Form angeordnet sind, wobei das Verfahren Entfalten der faltbaren Kollektormodulanordnung von einem gefalteten Zustand in einen entfalteten Zustand umfasst, wobei eine Vorrichtung nach einem der Ansprüche 1 bis 12 verwendet ist, durch Einsetzen der folgenden Schritte:
- lösbares Befestigen eines ersten seitlichen Gelenkelements (22) der Modulanordnung an einem ersten Befestigungsmittel (17,56) und eines zweiten seitlichen Gelenkelements (24) der Modulanordnung an einem zweiten Befestigungsmittel (17, 56) in einer hängenden Position,
- lösbares Verbinden eines ersten Endmoduls (21) neben dem ersten seitlichen Gelenkelement (22) mit einem ersten Verbindungsmittel (13, 14; 60') und Verbinden eines zweiten Endmoduls (21) neben dem zweiten seitlichen Gelenkelement (24) mit einem zweiten Verbindungsmittel (13, 14, 60'), und optionales Verbinden eines mittleren Gelenkelements (23) mit einem dritten Verbindungsmittel (60"),
- Aktivieren der Zuganordnung (4, 11; 50, 55), um die Befestigungsmittel (17, 56) und/oder die Verbindungsmittel (13, 14, 60) zum Öffnen der Gelenkmittel (22, 23, 24) relativ zu dem Träger zu bewegen,
- Lösen der Befestigungsmittel (17; 56) und der Verbindungsmittel (13, 14; 60) von der Kollektormodulanordnung, wenn die Kollektormodulanordnung seinen entfalteten Zustand erreicht hat.

14. Verfahren zum Aufstellen einer faltbaren Kollektormodulanordnung nach Anspruch 13 unter Verwenden einer Vorrichtung gemäss einem der Ansprüche 4 bis 8, wobei folgenden Schritte verwendet sind:
- lösbares Befestigen eines ersten seitlichen Gelenkelements (22) der Modulanordnung an einem inneren Ende (9) eines ersten Gleitbalkens (2) und eines zweiten seitlichen Gelenkelements (24) der Modulanordnung an einem inneren Ende (9) eines zweiten Gleitbalkens (3),
- lösbares Verbinden eines ersten Endmoduls (21) neben dem ersten seitlichen Gelenkelement (22) mit einem Schlitten (12) des ersten Gleitbalkens (2) und Verbinden eines zweiten Endmoduls (21) neben dem zweiten seitlichen Gelenkelement (24) mit einem Schlitten (12) des zweiten Gleitbalkens (3) durch die Verbindungsmittel (13, 14),
- Ziehen der ersten Zugmittel (4), um die Gleitbalken (2, 3) entlang des Hauptbalkens (1) zu ziehen und um die Gelenkelemente (22, 23, 24) zu öffnen,
- Ziehen der zweiten Zugmittel (11), um die Schlitten (12) entlang der Gleitbalken (2, 3) zu ziehen und um die Endmodule (21) anzuheben, und
- Lösen der Befestigungsmittel (17) zum Befestigen der ersten und der zweiten seitlichen Gelenkelemente (22, 24) und Lösen der Verbindungsmittel (13, 14) zum Verbinden der ersten und der zweiten Endmodule (21) mit dem Schlitten (12).

15. Verfahren nach einem der Ansprüche 13 oder 14, wobei die Vorrichtung mit der befestigten Kollektormodulanordnung von einem Kran angehoben ist, welcher die Zuganordnung beim Anheben der Kollektormodulanordnung aktiviert, so dass die Modulanordnung in einer hängenden Position entfaltet ist

16. Verfahren zum Aufstellen einer faltbaren Kollektormodulanordnung nach Anspruch 13 unter Verwenden einer Vorrichtung gemäss einem der Ansprüche 10 bis 12, wobei die folgenden Schritte eingesetzt werden:
- Anheben der Kollektormodulanordnung, welche an den Befestigungsmitteln (56) befestigt ist, durch vertikales Anheben der ersten und der zweiten seitlichen Gelenkelemente (22, 24) durch die Zuganordnung (50) bis die Kollektormodulanordnung so positioniert ist, um mit den Verbindungsmitteln (60) der Vorrichtung verbunden zu werden,
- lösbares Verbinden der Verbindungsmittel (60) mit einem unteren Ende der Endmodule (21) und mit einem mittleren Gelenkelement (23), angeordnet an einem unteren Ende der gefalteten Kollektormodulanordnung,
- Absenken der ersten und der zweiten seitlichen Gelenkelemente (22, 24) durch die Zuganordnung (50), wobei die Verbindungsmittel (60) vertikal fixiert bleiben, und wobei die Verbindungsmittel (60') nach aussen entlang dem Träger gleiten und die Kollektormodulanordnung durch das eigene Gewicht der Kollektormodulanordnung entfaltet, und
- Lösen der Befestigungsmittel (56) zum Befestigen der ersten und der zweiten seitlichen Gelenkelemente (22, 24) und Lösen der Verbindungselemente zum Verbinden der Kollektormodulanordnung.

17. Verfahren nach Anspruch 16, wobei die Verbindungsmittel (60) an den Endbereichen von Verlängerungen (57, 58, 59) des Trägers einen Schnappverschluss (61) aufweisen, welcher automatisch in das untere Ende der Endmodule (21) und in das mittlere Gelenkelement (23) einschnappt, angeordnet an dem unteren Ende der gefalteten Kollektormodulanordnung, wenn sie die Schnappverschlüsse passieren.

18. Verfahren zum Aufstellen einer faltbaren Kollektormodulanordnung, welches vier Kollektormodule umfasst, welche von zwei seitlichen Gelenkelementen und einem mittleren Gelenkelement zwischen benachbarten Modulen in einer Reihe verbunden sind, so dass die Module in einem gefalteten Zustand im Wesentlichen parallel zueinander und die Module in einem entfalteten Zustand in einer Zig-Zag-Form angeordnet sind, wobei das Verfahren umfasst Entfalten der gefalteten Kollektormodulanordnung von einem gefalteten Zustand in einen entfalteten Zustand unter Verwenden einer Vorrichtung gemäss dem Anspruch 9, wobei die folgenden Schritte eingesetzt sind:
- lösbares Befestigen seitlicher Gelenkelemente an Schlitten, welche entlang des Trägers laufen,
- lösbares Verbinden eines Kantenbereichs eines ersten Endmoduls der Modulanordnung mit einem Ende eines ersten Zugseils,
- lösbares Verbinden eines Kantenbereichs eines zweiten Endmoduls der Modulanordnung mit einem Ende eines zweiten Zugseils,
- Ziehen der ersten und der zweiten Zugmittel, um die Schlitten zu äusseren Enden des Trägers zu ziehen und um den Kantenbereich der Endmodule der Modulanordnung anzuheben, und
- Lösen der Befestigungsmittel und der Verbindungsmittel.

## Revendications

1. Appareil pour déplier un agencement de module collecteur pliable qui comprend quatre modules collecteurs (20, 21) couplés en série par deux parties latérales articulées (22, 24) et une partie médiane articulée (23) entre des modules adjacents de telle sorte que, dans un état plié, les modules sont agencés essentiellement parallèlement les uns aux autres et dans un état déplié, les modules sont agencés en zig-zag ou selon une forme plate depuis un état plié à un état déplié, l'appareil comprenant :
- un transporteur horizontal, auquel l'agencement de module collecteur est fixé dans une position suspendue,
- des moyens de fixation (17 ; 56) pour fixer de manière amovible les parties articulées (22, 23, 24) de l'agencement de module collecteur à l'appareil, qui sont agencés de manière à pouvoir se déplacer par rapport au transporteur horizontal,
- des moyens de couplage (13, 14 ; 60) pour coupler de manière amovible les modules de collecteurs (20, 21) et/ou les parties articulées (22, 23, 24) de l'agencement de module collecteur au transporteur horizontal, qui sont agencés de manière coulissante sur le transporteur horizontal, et
- un agencement de traction (4, 11 ; 50, 55) fixé aux moyens de fixation (17 ; 56) et/ou à des moyens de couplage (13, 14 ; 60) pour déplacer les moyens de fixation (17 ; 56) et/ou les moyens de couplage (13, 14 ; 60) par rapport au transporteur horizontal ;
- lors du dépliage de l'agencement de module collecteur, l'agencement de traction (4, 11 ; 50, 55) étant activé pour ouvrir les parties articulées (22, 23, 24) de l'agencement de module collecteur par un mouvement des moyens de fixation (17 ; 56) et/ou des moyens de couplage (13, 14 ; 60) de sorte qu'avant le dépliage de l'agencement de module collecteur, l'appareil pourvu du module suspendu est adapté pour être levé dans une zone prédéterminée où l'agencement de module collecteur doit être installé.

2. Appareil selon la revendication 1, le transporteur horizontal comprenant,
- une barre horizontale principale (1) et
- deux barres coulissantes (2, 3) montées de manière coulissante sur la barre principale (1) de sorte que les barres coulissantes (2, 3) glissent dans une direction opposée le long de la barre principale (1) depuis une position rétractée vers une position étendue faisant saillie sur la barre principale (1) et
- les moyens de fixation (17 ; 56) étant agencés dans une zone centrale de la barre principale (1) ou à une extrémité interne (9) de chaque barre coulissante (2 ; 3) d'une manière coulissante, et
- des moyens de couplage (13, 14 ; 60) étant agencés sur chaque barre coulissante (2 ; 3) pour coupler de manière séparée les modules collecteurs (20, 21) vers la barre coulissante (2 ; 3).

3. Appareil selon l'une des revendications 1 ou 2, dans lequel
- les moyens de couplage (13, 14) sont agencés pour coupler chaque module d'extrémité (21) de l'agencement de module collecteur au transporteur,
- l'agencement de traction (4, 11) est dévié aux deux extrémités du transporteur et fixé aux moyens de couplage (13, 14) pour faire coulisser les moyens de fixation (17) et les moyens de couplage (13, 14) le long du transporteur pour ouvrir les parties articulées (22, 23, 24) de l'agencement de module collecteur et pour lever un bord externe (26) des modules d'extrémité (21) dans la direction du transporteur en tirant sur l'agencement de traction (4, 11).

4. Appareil selon l'une des revendications 2 à 3, qui comprend en outre :
- deux chariots (12) étant chacun supporté de manière coulissante sur une barre coulissante (2, 3) de sorte que les chariots (12) glissent dans une direction opposée le long de leur barre coulissante (2 ; 3) depuis une extrémité interne (9) vers une extrémité externe (10) de la barre coulissante (2 ; 3),
- les moyens de fixation (17) étant prévus à une extrémité interne (9) de chaque barre coulissante (2 ; 3) pour fixer séparément l'agencement de module collecteur à l'extrémité interne (9) de la barre coulissante (2 ; 3) à une partie articulée (22, 24) de l'agencement de module, et
- l'agencement de traction comprenant un premier moyen de traction (4) pour tirer les barres coulissantes (2, 3) le long de la barre principale (1), et un deuxième moyen de traction (11) pour tirer les chariots (12) le long de leur barre coulissante (2 ; 3) de sorte qu'un bord externe (26) du module d'extrémité (21) est levé dans une direction de la barre coulissante (2 ; 3), et
- en tirant le premier moyen de traction (4) et le deuxième moyen de traction (11), les barres coulissantes (2, 3) s'éloignent l'une de l'autre et les chariots (12) s'éloignent l'un de l'autre, le module collecteur pliable étant alors déplié en ouvrant les parties articulées (22, 23, 24) du module collecteur et en levant le bord externe (26) des modules d'extrémités (21).

5. Appareil selon la revendication 4, dans lequel le deuxième moyen de traction comprend une boucle fermée (11) circulant autour de deux poulies au niveau d'extrémités opposées de la barre coulissante, et fixée à un point relatif à la barre principale (1), et agencée de sorte que la boucle fermée (11) est entraînée par le mouvement des barres coulissantes (2 ; 3).

6. Appareil selon l'une des revendications 4 ou 5, dans lequel le moyen de couplage comprend au moins un support (13) s'étendant depuis le chariot (12) avec une extrémité orientée vers l'agencement de module, ladite extrémité de support portant un rouleau (14) qui s'engage avec le module d'extrémité (21) de l'agencement de module à l'arrière du module d'extrémité (21).

7. Appareil selon l'une des revendications 5 ou 6, dans lequel le premier moyen de traction comprend au moins une boucle fermée (4) circulant autour de deux poulies (5) au niveau d'extrémités opposées de la barre principale (1), et dans lequel chacune des barres coulissantes (2 ; 3) est couplée à une des deux sections de circuit du circuit fermé (4) qui vont en direction contraire l'une de l'autre.

8. Appareil selon l'une des revendications 5 à 6, dans lequel la barre principale (1) comprend deux poulies (5) au niveau d'extrémités opposées et le premier moyen de traction comprend deux cordes principales (30, 31), chacune des cordes principales est fixée à l'une des barres coulissantes (2, 3) et déviée par une poulie (5) vers le dessus de la barre principale.

9. Appareil selon l'une des revendications 1 ou 2, dans laquelle un rouleau est agencé au niveau de chaque extrémité externe du transporteur, et l'agencement de traction comprend
- deux cordes de tractions, chacune étant fixée à une première extrémité au niveau du bord d'un module d'extrémité de l'agencement de module et est déviée par le rouleau de son côté, ce grâce à quoi une deuxième extrémité de la deuxième corde de traction peut être poussée pour lever la partie de bord du module d'extrémité de l'agencement de module et
- une autre corde de traction attachée à une première extrémité au niveau d'une partie articulée médiane (23) de l'agencement de module, l'autre corde de traction étant déviée par un premier rouleau agencé sur une section médiane du transporteur et un deuxième rouleau agencé à une extrémité externe du transporteur, ce grâce à quoi une deuxième extrémité de l'autre corde de traction peut être poussée pour lever la partie articulée médiane de l'agencement de module.

10. Appareil selon l'une des revendications 1 ou 2, dans lequel
- les moyens de fixation (56) sont déplaçables verticalement par rapport au transporteur et conçus pour être fixés de façon amovible aux parties articulées latérales (22, 24) situées au niveau d'une extrémité supérieure de l'agencement de module de collecteur pliable,
- les moyens de couplage (60) sont fixes verticalement par rapport au transporteur et sont conçus pour être fixés de façon amovible à une extrémité inférieure des modules d'extrémités (21) et à une partie articulée médiane (23) située à une extrémité inférieure de l'agencement de module de collecteur articulé,
- l'agencement de traction (50, 55) est fixé aux moyens de fixation (56) pour déplacer verticalement les moyens de fixation (56) par rapport au transporteur et aux moyens de couplage (60) afin d'ouvrir les parties articulées (22, 23, 24) de l'agencement de module collecteur en baissant les moyens de fixation (56) par rapport aux moyens de couplage (60).

11. Appareil selon la revendication 10, dans lequel le transporteur comprend des premières extensions (57, 58) s'étendant vers le bas depuis une extrémité externe (10) de deux barres coulissantes (2 ; 3) du transporteur et
- une deuxième extension (59) s'étendant vers le bas depuis une barre principale (1) du transporteur et dans lequel les moyens de couplage (60) sont agencés dans des zones d'extrémités des première et deuxième extensions (57, 58, 59).

12. Appareil selon l'une des revendications 10 ou 11, dans lequel l'agencement de traction comprend
- un premier moyen de traction en forme de moyen allongé flexible (50) guidé par deux blocs de guidage (52, 53) agencés sur le transporteur, des extrémités du premier moyen de traction étant couplées aux moyens de fixation (56) et
- un deuxième moyen de traction (55) pour tirer les blocs de guidage (52, 53) vers des extrémités opposées le long du transporteur, le deuxième moyen de poussée (55) comprenant une boucle fermée (55) circulant autour de deux poulies (5) disposées à des extrémités opposées de la barre principale (1).

13. Procédé pour mettre en place un agencement de module collecteur pliable qui comprend quatre modules collecteurs (20, 21) couplés en série par deux parties articulées latérales (22, 24) et une partie articulée médiane (23) entre des modules adjacents de telle sorte que, dans un état plié, les modules sont agencés essentiellement parallèlement les uns par rapport aux autres et, dans un état déplié, les modules sont agencés en forme de zig-zag ou selon une forme plate, le procédé incluant le dépliage de l'agencement de module collecteur pliable depuis un état plié vers un état déplié en utilisant un appareil selon l'une des revendications 1 à 12, et en utilisant les étapes suivantes:
- la fixation amovible dans une position suspendue d'une première partie articulée latérale (22) de l'agencement de module à un premier moyen de fixation (17, 56), et d'une deuxième partie articulée latérale (24) de l'agencement de module à un deuxième moyen de fixation (17, 56),
- le couplage amovible d'un premier module d'extrémité (21) à côté de la première partie articulée latérale (22) à un premier moyen de couplage (13, 14 ; 60') et le couplage d'un deuxième module d'extrémité (21) à côté de la deuxième partie articulée latérale (24) à un deuxième moyen de couplage (13, 14, 60'), et le couplage optionnel d'une partie articulée médiane (23) à un troisième moyen de couplage (60"),
- l'activation de l'agencement de traction (4, 11 ; 50, 55) pour déplacer le moyen de fixation (17, 56) et/ou les moyens de couplage (13, 14, 60) par rapport au transporteur pour l'ouverture des parties articulées (22, 23, 24),
- la libération des moyens de fixation (17 ; 56) et des moyens de couplage (13, 14 ; 60) de l'agencement de module collecteur, lorsque l'agencement de module collecteur a atteint son état déplié.

14. Procédé pour mettre en place un agencement de module collecteur pliable selon la revendication 13 en utilisant un appareil selon l'une des revendications 4 à 8, en utilisant les étapes suivantes :
- la fixation amovible d'une première partie articulée latérale (22) de l'agencement de module à une extrémité interne (9) d'une première barre coulissante (2) et d'une deuxième partie articulée latérale (24) de l'agencement de module à une extrémité interne (9) d'une deuxième barre coulissante (3),
- le couplage amovible d'un premier module d'extrémité (21) à côté de la première partie articulée latérale (22) à un chariot (12) de la première barre coulissante (2) et le couplage d'un deuxième module d'extrémité (21) à côté de la deuxième partie articulée latérale (24) à un chariot (12) de la deuxième barre coulissante (3) par les moyens de couplage (13, 14),
- la traction du premier moyen de traction (4) pour tirer les barres coulissantes (2, 3) le long de la barre principale (1) et pour ouvrir les parties articulées (22, 23, 24),
- la traction du deuxième moyen de traction (11) pour tirer les chariots (12) le long des barres coulissantes (2, 3) et pour lever les modules d'extrémités (21), et
- la libération des moyens de fixation (17) pour fixer la première et la deuxième partie articulée latérale (22, 24) et la libération des moyens de couplage (13, 14) pour coupler le premier et le deuxième module d'extrémité (21) au transporteur (12).

15. Procédé selon l'une des revendications 13 ou 14, dans lequel l'appareil avec l'agencement de module collecteur fixé est levé par une grue, qui actionne l'agencement de traction, lors du levage de l'agencement de module collecteur, de telle sorte que l'agencement de module est déplié dans une position suspendue.

16. Procédé pour mettre en place un agencement de module collecteur pliable selon la revendication 13 en utilisant un appareil selon l'une des revendications 10 à 12, en utilisant les étapes suivantes :
- le levage de l'agencement de module collecteur fixé aux moyens de fixation (56) en levant verticalement les première et deuxième parties articulées latérales (22, 24) à l'aide de l'agencement de traction (50) jusqu'à ce que l'agencement de module collecteur soit positionné pour pouvoir s'accoupler avec les moyens de couplage (60) de l'appareil,
- le couplage amovible des moyens de couplage (60) à une extrémité inférieure des modules d'extrémité (21) et à une partie articulée médiane (23) située à une extrémité inférieure de l'agencement de module collecteur pliable,
- l'abaissement des première et deuxième parties articulées latérales (22, 24) par l'agencement de traction (50), le moyen de couplage (60) restant fixe verticalement, le moyen de couplage (60') coulissant vers l'extérieur le long du transporteur et l'agencement de module collecteur se dépliant en raison du propre poids de l'agencement de module collecteur, et
- la libération du moyen de fixation (56) pour fixer les première et deuxième parties articulées latérales (22, 24) et la libération du moyen de couplage (60) pour coupler l'agencement de module de collecteur.

17. Procédé selon la revendication 16, dans lequel le moyen de couplage (60) comprend un clipsage (61) au niveau des zones d'extrémité des extensions (57, 58, 59) du transporteur, qui se clipse automatiquement dans l'extrémité inférieure des modules d'extrémité (21) et dans la partie articulée médiane (23) située au niveau de l'extrémité inférieure de l'agencement de module collecteur pliable, lorsqu'ils passent les clips.

18. Procédé pour mettre en place un agencement de module collecteur pliable qui comprend quatre modules collecteurs couplés en série par deux parties articulées latérales et une partie articulée médiane entre des modules adjacents de telle sorte que dans un état plié les modules sont agencés de manière essentiellement parallèle l'un par rapport à l'autre et dans un état déplié les modules sont agencés en forme de zig-zag, le procédé incluant le dépliage de l'agencement de module collecteur pliable depuis un état plié vers un état déplié en utilisant un appareil selon la revendication 9, en utilisant les étapes suivantes :
- la fixation amovible des parties articulées latérales à des patins qui s'étendent le long du transporteur,
- le couplage amovible d'un bord d'un premier module d'extrémité de l'agencement de module à une extrémité d'une première corde de traction,
- le couplage amovible d'un bord d'un deuxième module d'extrémité de l'agencement de module à une extrémité d'une deuxième corde de traction,
- la traction des premier et deuxième moyens de traction pour faire glisser les patins vers les extrémités extérieures du transporteur et pour lever le bord des modules d'extrémité de l'agencement de module, et
- la libération des moyens de fixation et des moyens de couplage.
